# EUROPEAN PATENT SPECIFICATION

(11) **EP 3 177 988 B1**
(45) Date of publication and mention of the grant of the patent: **26.12.2018**
(21) Application number: 15754283.8
(22) Date of filing: 05.08.2015
(51) Int. Cl.: G06F 7/58

(54) **IMPROVEMENTS IN AND RELATING TO RANDOM NUMBER GENERATION APPARATUS**
VERBESSERUNGEN AN UND IM ZUSAMMENHANG MIT EINER ZUFALLSNUMMERNERZEUGUNGSVORRICHTUNG
PERFECTIONNEMENTS APPORTÉS ET SE RAPPORTANT À UN APPAREIL DE GÉNÉRATION DE NOMBRES ALÉATOIRES

(30) Priority: 08.08.2014 GB 201414123
(43) Date of publication of application: 14.06.2017
(73) Proprietor: Apply Mobile Limited, Manchester, Greater Manchester M30 9ES (GB)
(72) Inventor: SUNDELIN, Henri, FI-02700 Kauniainen (FI); KOURI, Juha, FI-00320 Helsinki (FI); MCDERMOTT, Craig, Guildford, Surrey GU3 3HA (GB)
(74) Representative: Appleyard Lees IP LLP
(86) International application number: PCT/GB2015/052266
(87) International publication number: WO 2016/020679

(56) References cited:
- GB-A- 2 447 674
- US-A1- 2013 191 428
- Lane Westlund: "Introduction 2 Setup 3 Adding Randomness Random Number Generation Using the MSP430", , 13 October 2006 (2006-10-13), XP055182354, Retrieved from the Internet: URL:http://www.ti.com/lit/an/slaa338/slaa3 38.pdf [retrieved on 2015-04-13]
- RABIA LATIF ET AL: "Hardware-Based Random Number Generation in Wireless Sensor Networks(WSNs)", 25 June 2009 (2009-06-25), ADVANCES IN INFORMATION SECURITY AND ASSURANCE, SPRINGER BERLIN HEIDELBERG, BERLIN, HEIDELBERG, PAGE(S) 732 - 740, XP019120391, ISBN: 978-3-642-02616-4 sections 1,2
- Mary Leema: "A Secured Approach for Secret Key Extraction from Wireless Signal Strength Preserving Authentication and Security", International Journal of Emerging Research in Management &Technology ISSN, 1 November 2013 (2013-11-01), pages 2278-9359, XP055222091, Retrieved from the Internet: URL:http://www.ermt.net/docs/papers/Volume _2/issue11_November2013/V2N11-114.pdf [retrieved on 2015-10-20]

## Description

### Field of the Invention

The present invention relates to random numbered generation apparatus, methods for generating random numbers and to communication apparatuses and methods embodying the same.

### Background to the Invention

In many applications, in particular relating to cryptography, the generation of random numbers is useful. The embodiments of the present invention aim to provide an improved random number generating apparatus and method.

### Summary of the Invention

According to the present invention in a first aspect, there is provided a random number generation apparatus comprising a signal receiver and a memory, characterised by further comprising, a received signal strength indicator and a memory, whereby the random number is generated by determining how many measurements of the RSSI are at a certain level before the level changes and using the string of numbers thereby generated for a random number.

Suitably, the random number is used as a seed for a cryptographic operation.

According to the present invention in a second aspect, there is provided a random number generation method comprising receiving a signal and characterised by determining a received signal strength over time, whereby the random number is generated by determining how many measurements of the received signal strength are at a certain level before the level changes and using the string of numbers thereby generated for a random number.

Suitably, the random number is used as a seed for a cryptographic operation.

### Brief Description of the Drawings

The present invention will now be described, by way of example only, with reference to the following drawings; in which:
Figure 1 is a schematic illustration of a security fault for use in a banking transaction.
Figure 2 is a schematic illustration of components within the fob illustrated in Figure 1.
Figure 3 is a functional diagram illustrating a method of operation of the random number generation device illustrated in Figure 2 for a for a first and second random number.
Figure 4 is a functional diagram illustrating a method of operation of the random number generation device illustrated in Figure 2 for a third random number.
Figure 5 is a functional diagram illustrating a method of operation of the random number generation device illustrated in Figure 2 for a fourth random number.

### Description of the Preferred Embodiments

The aspects and features of the present invention are described hereinafter with reference to sequence illustrations of user interfaces, methods, and computer program products according to exemplary embodiments of the present invention. It will be understood that each sequence and combinations of sequences in the illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the sequence.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the sequence.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the sequence.

Furthermore, each sequence may represent a module, segment, or portion of code, which comprises one or more executable instructions for implementing the specified logical function(s). It should also be noted that in some alternative implementations, the functions noted in the sequence may occur out of the order. For example, two sequences shown in succession may in fact be executed substantially concurrently or the sequences may sometimes be executed in the reverse order, depending upon the functionality involved.

Alternatively, embodiments of the present invention can be implemented in hardware, or using programmable logic such as complex programmable logic devices ("CPLD") and field programmable gate arrays ("FPGA").

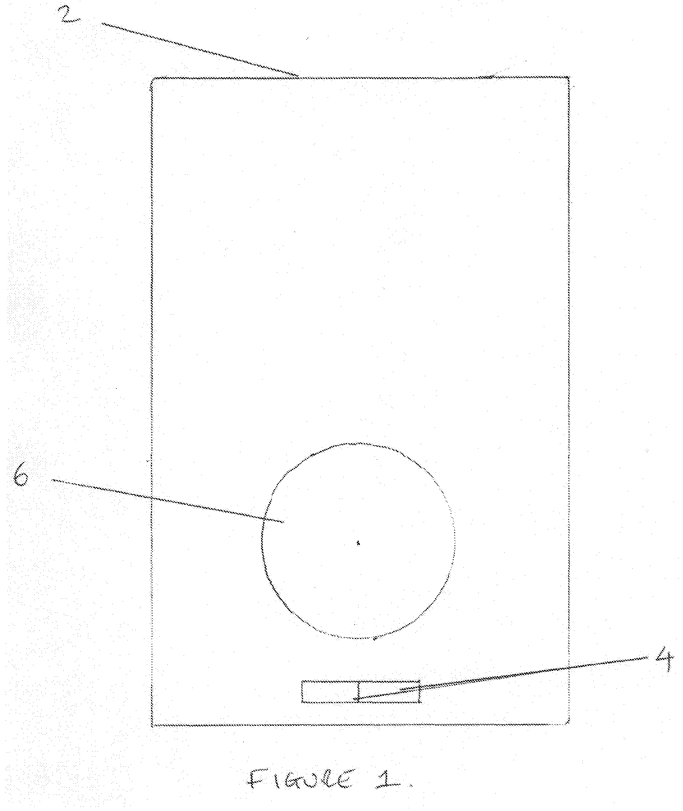

Referring to Figure 1 of the accompanying drawings, there is shown a security fob 2, the security fob 2 comprising an LED indicator 4 and a key pad 6.

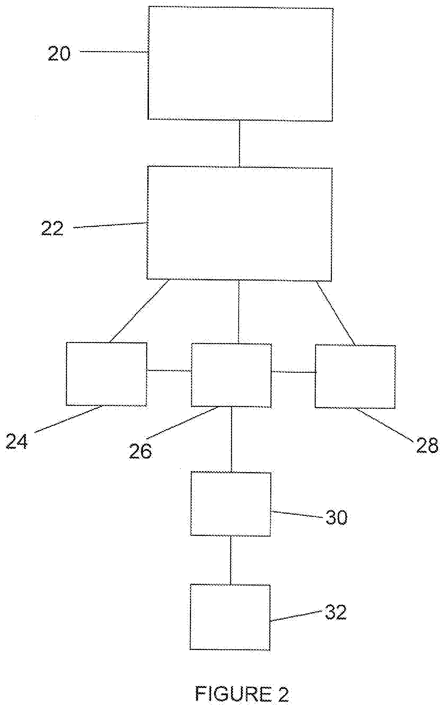

Referring to Figure 2 of the accompanying drawings, there is shown a functional diagram illustrating components of the fob of Figure 1.

The security fob 2 operates in one of many ways known to those skilled in the art to generate a random number for security purposes. Generating true randomness is the only way of ensuring that cryptographic material cannot be predicted and therefore preventing compromise in confidentiality and integrity in systems that use cryptographic material.

Referring to Figure 2 there is shown a first main processor 20 a near-field wireless second processor 22, a timer 24, a memory 26, a received signal strength indicator ("RSSI') determiner 28, an XOR operator 30 and an outputter 32.

The second processor 22 can, for instance be a Nordic Semiconductor nRF51822 System on Chip ("SoC") device. This has the capability of generating random numbers based on thermal noise. This is a predetermined operation that generates a first random number.

The timer 24 is a 16MHz/32 bit free running timer configured to time the number of cycles of the timer for the second processor to generate a random number.

The memory 26 stores data for use by the fob 2.

The RSSI determiner 28 is configured to determine the strength of a received Bluetooth Low Energy signal and to output a result.

The XOR operator 30 carries out an XOR operation on data input to it.

The outputter 32 is configured to output a produced random number to another component,

Referring to 3 of the accompanying drawings there is shown a first novel method for generating a random number according to the present embodiment using the apparatus shown and described in relation to Figures 1 and 2.

In step 300 the second processor generates a random number byte based on thermal noise as is known in the art.

In step 302 timer 24 determines the number of cycles it takes for the second processor 22 to generate a random number and, in step 304, divides the output result into four bytes which, in step 306, are XORed together by XOR operator 30. This outputs a random number byte which, in step 308, is stored in memory 26. When upper level software asks random number to use as security purposes, lower level software starts the hardware random number generator and at the same time it stores the starts time of generation. After hardware generator is finished to generate one random number, it stops the timer and calculates the difference between the start and stop time and stores it to memory and uses it as one random number

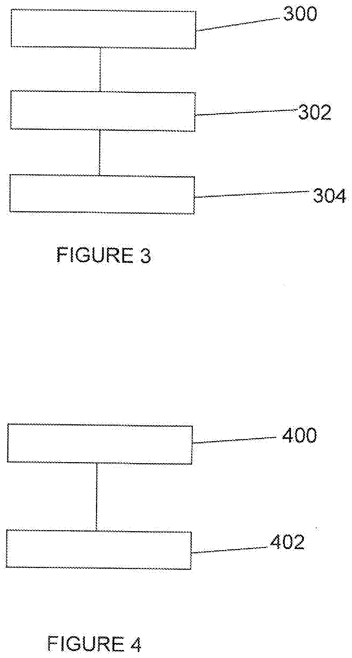

Referring now to Figure 4 of the accompanying drawings, there is shown a second novel method of generating a random number.

The second processor 22 receives Bluetooth low energy ("BLE") 2.4GHz radio wave signals as a signal receiver. As a form of electromagnetic radiation, BLE radio waves are affected by many phenomena. One of the main issues is path attenuation that may be due to any effects, such as free-space loss, refraction, diffraction, reflection, aperture-medium coupling loss, and absorption. Path attenuation is also influenced by different materials on the radio path, propagation medium (dry or moist air), the distance between the transmitter and the receiver, and the height and location of antennas. Also other devices with interfering radio signals at the same frequency affects the RSSI.

The present apparatus uses the value of RSSI as the basis for the generation of another random number byte.

In step 400, the RSSI determiner 28 measures the RSSI at the instance of the command for the generation of a random number. At step 402 the last byte of the determined figure for the RSSI strength is selected as a random number and in step 404 this random byte is stored in the memory 26.

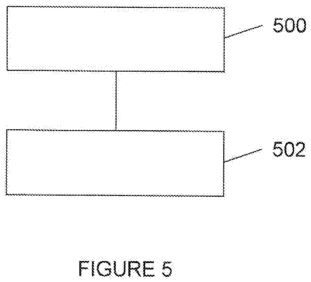

Referring to Figure 5 of the accompanying drawings there is shown a third novel method for generating a random number.

The third novel method for random number generation relies upon the fact that the RSSI varies randomly over time.

In step 500 the RSSI determiner 28 measures the RSSI periodically, for instance every 10mS. This generates an output that in step 502 is stored in memory

Let's assume that we have RSSI scale from A to F and our time resolution is one character in this text.
BBBBCCCCCCCCCDDCCCCABBBBBBBB

From this we get that there are 4xB 9xC 2xD 4xC 1xA and 8xB. In step 504 the time difference between every RSSI change is calculated, that is the time difference between signal variations, and that sequence of numbers is used as a random number. So in this example we get random number: 492418. To get one byte eight of the lowest bits of every value (AND 0xFF) are selected and XOR together.

An API for a random library is very simple, requiring only three functions.

### 1. void initrng(void);

This initializes the random number generator and used timer. This must be call only once, when the device is woken up from sleep before initializing the BLE. This RNG and its timer does not preserve anything when the apparatus is in sleep mode.

### 2. unsigned byte getrandombyte(void);

For getting one random number byte. A byte will be available at variable times after all steps of calculation is done. Also to get the first number, a BLE radio link must be activated well before reading the numbers because of the required RSSI calculations. Latest RSSI and other values are stored to memory 26, so this function can be called also after the BLE is shut down. The size of the buffer determines how many numbers can be read after shutting down of the BLE link.

### 3. unsigned byte *getrandombyte(unsigned byte count);

This is for getting array of random number bytes, count+1. Count is limited to 255. All restrictions from getrandombyte() are valid.

A final random number can be generated, if desired by XORing any combination of the random numbers generated according to first through fourth methods for generating a random number as described above.

Any of the novel random numbers described above or any combination of them, with or without the random number generated by the RNG processor can be used as a seed for a cryptographic operation by the fob 2.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A random number generation apparatus comprising a signal receiver (22), a memory (26), and a received signal strength indicator, RSSI, (28), **characterised in that** a random number is generated by determining how many measurements of the RSSI are at a certain level before a level of a measurement of the RSSI changes to a level different from said certain level and using a string of such numbers of measurements thus determined for generating the random number.

2. A random number generation apparatus according to claim 1 wherein the random number is used as a seed for a cryptographic operation.

3. A random number generation method comprising receiving a signal and determining a received signal strength over time, whereby a random number is generated by determining how many measurements of the received signal strength are at a certain level before a level of the received signal strength changes to a level different from said certain level of the received signal strength and using a string of such numbers of measurements thus determined for generating the random number.

4. A random number generation method according to claim 3 wherein the random number is used as a seed for a cryptographic operation.

## Patentansprüche

1. Zufallszahl-Erzeugungsvorrichtung, die einen Signalempfänger (22) und einen Speicher (26) und einen Empfangssignalstärkenindikator bzw. RSSI (28) umfasst, **dadurch gekennzeichnet, dass** eine Zufallszahl erzeugt wird, indem bestimmt wird, wie viele Messungen des RSSI sich an einem bestimmten Niveau befinden, bevor sich ein Niveau einer Messung des RSSI zu einem Niveau ändert, das sich von dem gewissen Niveau unterscheidet, und eine Kette derartiger Nummern von derartig bestimmten Messungen zur Erzeugung der Zufallszahl verwendet wird.

2. Zufallszahl-Erzeugungsvorrichtung nach Anspruch 1, wobei die Zufallszahl als ein Seed für eine kryptographische Operation verwendet wird.

3. Zufallszahl-Erzeugungsverfahren, das Empfangen eines Signals und Bestimmen einer Empfangssignalstärke im Laufe der Zeit umfasst, wobei eine Zufallszahl erzeugt wird, indem bestimmt wird, wie viele Messungen der Empfangssignalstärke sich an einem bestimmten Niveau befinden, bevor sich ein Niveau der Empfangssignalstärke zu einem Niveau ändert, das sich von dem gewissen Niveau der Empfangssignalstärke unterscheidet, und eine Kette derartiger Nummern von derartig bestimmten Messungen zur Erzeugung der Zufallszahl verwendet wird.

4. Zufallszahl-Erzeugungsverfahren nach Anspruch 3, wobei die Zufallszahl als ein Seed für eine kryptographische Operation verwendet wird.

## Revendications

1. Appareil de génération de nombre aléatoire comprenant un récepteur de signal (22) et une mémoire (26) et un indicateur d'intensité du signal reçu (RSSI) (28)
**caractérisé en ce qu'**un nombre aléatoire est généré en déterminant combien de mesures de l'indicateur RSSI sont à un certain niveau avant qu'un niveau d'une mesure de l'indicateur RSSI ne passe à un niveau différent dudit certain niveau et en utilisant une série de tels nombres de mesures ainsi déterminées pour générer le nombre aléatoire.

2. Appareil de génération de nombre aléatoire selon la revendication 1, dans lequel le nombre aléatoire est utilisé comme semence pour une opération cryptographique.

3. Procédé de génération de nombre aléatoire consistant à recevoir un signal et à déterminer une intensité du signal reçu au fil du temps, grâce à quoi un nombre aléatoire est généré en déterminant combien de mesures de l'intensité du signal reçu sont à un certain niveau avant qu'un niveau de l'intensité du signal reçu ne passe à un niveau différent dudit certain niveau de l'intensité du signal reçu et en utilisant une série de tels nombres de mesures ainsi déterminées pour générer le nombre aléatoire.

4. Procédé de génération de nombre aléatoire selon la revendication 3, dans lequel le nombre aléatoire est utilisé comme semence pour une opération cryptographique.
